# DEMANDE DE BREVET EUROPEEN

(11) **EP 2 184 502 A1**
(43) Date de publication de la demande: **12.05.2010**
(21) Numéro de dépôt: 09305975.6
(22) Date de dépôt: 14.10.2009
(51) Int. Cl.: F16D 3/76, F16D 23/04

(54) **Absorption des oscillations de couple pour dispositif de couplage d'un arbre de boîte de vitesses avec un pignon fou monté sur cet arbre**

(30) Priorité: 04.11.2008 FR 0806130
(71) Demandeur: Renault S.A.S., 92100 Boulogne-Billancourt (FR)
(72) Inventeur: Nouraout, Khaled, 92600 Asnières (FR)

(57) **Abrégé**

L'invention concerne un dispositif de couplage (10) d'un arbre (2) de boîte de vitesses (1) avec un pignon fou (4) monté sur cet arbre (2), comportant un moyeu (11) solidaire en rotation dudit arbre et des moyens de synchronisation (14A) de la vitesse du pignon fou avec celle dudit moyeu qui comprennent au moins un anneau conique (16) engagé sur ledit moyeu et solidaire en rotation de celui-ci.

Selon l'invention, le dispositif de couplage comporte un anneau élastiquement déformable (18) interposé radialement entre ledit anneau conique et ledit moyeu.

## Description

### DOMAINE TECHNIQUE AUQUEL SE RAPPORTE L'INVENTION

La présente invention concerne de manière générale la synchronisation des rapports de boîtes de vitesses mécaniques ou robotisées.

Elle concerne plus particulièrement un dispositif de couplage d'un arbre de boîte de vitesses avec un pignon fou monté sur cet arbre, comportant un moyeu solidaire en rotation dudit arbre et des moyens de synchronisation de la vitesse du pignon fou avec celle dudit moyeu qui comprennent au moins un anneau conique engagé sur ledit moyeu et solidaire en rotation de celui-ci.

### ARRIERE-PLAN TECHNOLOGIQUE

Les boîtes de vitesses comprennent généralement deux arbres parallèles, dont un arbre primaire d'entrée raccordé au moteur via un embrayage, et un arbre secondaire de sortie raccordé aux roues du véhicule via un différentiel.

L'arbre primaire est pourvu de pignons fou, c'est-à-dire de pignons montés libres en rotation sur cet arbre, qui engrènent des pignons montés fixes sur l'arbre secondaire.

Pour permettre le passage des rapports, ces boîtes de vitesses comportent des dispositifs de couplage du type précité, permettant de solidariser en rotation l'arbre primaire avec l'un ou l'autre des pignons fous de manière à égaliser leurs vitesses de rotation et, partant, à entraîner l'arbre secondaire en rotation.

Les moyens de synchronisation d'un tel dispositif de couplage comprennent généralement au moins deux premiers anneaux coniques solidaires en rotation du moyeu et un anneau conique intermédiaire qui est interposé entre les deux premiers anneaux coniques et qui est solidaire en rotation du pignon fou via un flasque. Ils comprennent également un baladeur commandé par le conducteur du véhicule et qui est adapté à presser les anneaux coniques les uns contre les autres de manière à progressivement mettre l'anneau conique intermédiaire et le pignon fou en rotation à la vitesse de l'arbre primaire.

Les défauts de fabrication et d'assemblage des boîtes de vitesses génèrent des erreurs d'alignement axial et angulaire des anneaux coniques les uns par rapport aux autres. Lors de la mise sous pression des anneaux coniques les uns contre les autres, les efforts axiaux ne se répartissent alors pas de manière homogène sur l'ensemble du pourtour de ces anneaux coniques. Par conséquent, lorsque les anneaux coniques tournent, le couple transmis par le moyeu au pignon fou oscille périodiquement de manière non désirée, en fonction de la position angulaire du moyeu. De ce fait, lorsque le conducteur passe un rapport de vitesse, il ressent de légères variations d'accélération du véhicule, qui peuvent être désagréables voire même gênantes.

Pour diminuer cette gêne, il est connu d'usiner et d'assembler avec un soin tout particulier les anneaux coniques des dispositifs de couplage. Cette solution s'avère toutefois onéreuse et présente une efficacité limitée.

### OBJET DE L'INTENTION

Afin de remédier à l'inconvénient précité de l'état de la technique, la présente invention propose un nouveau dispositif de couplage d'un pignon fou avec un arbre de boîte de vitesses, apte à amortir ces oscillations de couple.

Plus particulièrement, on propose selon l'invention un dispositif de couplage tel que défini dans l'introduction, dans lequel il est prévu un anneau élastiquement déformable interposé radialement entre ledit anneau conique et ledit moyeu.

Cet anneau élastiquement déformable offre à l'anneau conique des degrés de liberté radial et angulaires par rapport au moyeu. Plus précisément, lorsque les anneaux coniques ne sont pas précisément alignés les uns par rapport aux autres, l'anneau élastiquement déformable est adapté à s'écraser de manière que les efforts axiaux se répartissent de manière homogène sur l'ensemble du pourtour des anneaux coniques.

Ainsi, grâce à l'invention, l'anneau élastiquement déformable permet d'absorber les oscillations de couple afin de lisser le couple restitué au pignon fou. Les variations d'accélération ressenties par le conducteur sont ainsi sensiblement réduites.

D'autres caractéristiques avantageuses et non limitatives du dispositif de couplage conforme à l'invention sont les suivantes :
- ledit anneau élastiquement déformable comporte une partie tubulaire qui est emmanchée sur le moyeu et sur laquelle ledit anneau conique est emmanché ;
- le moyeu comporte des moyens de butée axiale adaptés à coopérer avec ledit anneau conique et ledit anneau élastiquement déformable présente une partie qui s'interpose axialement entre lesdits moyens de butée axiale et ledit anneau conique ;
- ladite partie de l'anneau élastiquement déformable est formée par une couronne qui borde une extrémité de sa partie tubulaire et qui est prise en sandwich entre lesdits moyens de butée axiale et ledit anneau conique ;
- les moyens de synchronisation comportent plusieurs anneaux coniques de diamètres différents solidaires en rotation du moyeu et ledit anneau élastiquement déformable est interposé radialement entre l'anneau conique de plus petit diamètre et ledit moyeu ;
- ledit anneau élastiquement déformable présente des encoches au travers desquelles chaque anneau conique autre que l'anneau conique de plus petit diamètre prend appui contre le moyeu ;
- ledit anneau élastiquement déformable est réalisé d'une seule pièce en élastomère ou en tôle ondulée ; et
- ledit anneau élastiquement déformable est monté libre par rapport audit anneau conique ou est rapporté par collage ou surmoulage sur ledit anneau conique.

### DESCRIPTION DETAILLEE D'UN EXEMPLE DE REALISATION

La description qui va suivre, en regard du dessin annexé, donnée à titre d'exemple non limitatif, fera bien comprendre en quoi consiste l'invention et comment elle peut être réalisée.

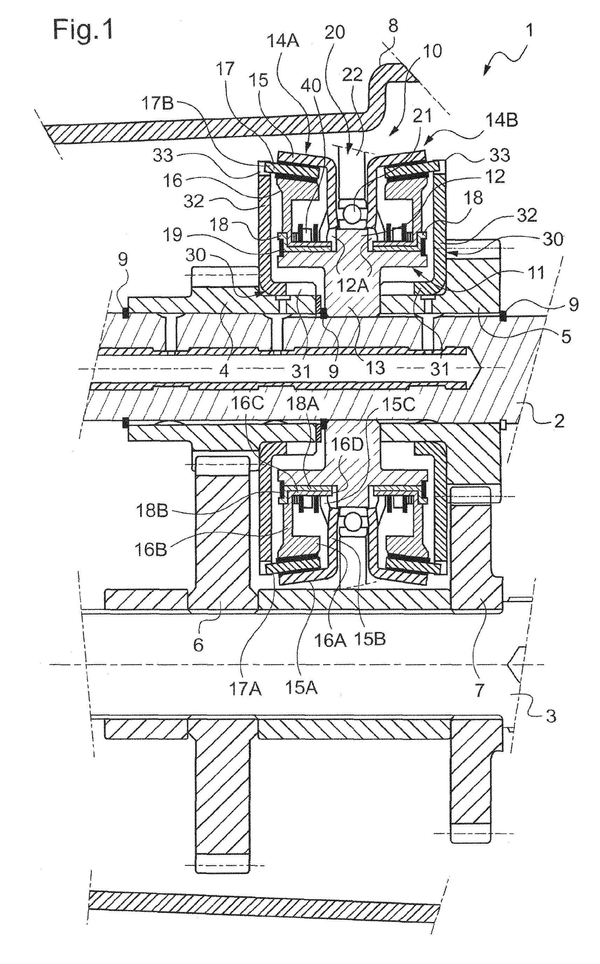

Sur le dessin annexé, la figure 1 est une vue en coupe longitudinale d'une partie d'une boîte de vitesses, sur laquelle est représenté un dispositif de couplage conforme à l'invention.

Sur cette figure 1, on a représenté schématiquement un arbre primaire 2 et un arbre secondaire 3 disposés horizontalement dans un carter 8 d'une boîte de vitesses 1 d'un moteur de véhicule automobile.

Classiquement, l'arbre primaire 2 est lié au vilebrequin du moteur par l'intermédiaire d'un embrayage (non représenté) tandis que l'arbre secondaire 3 est lié aux roues motrices du véhicule par l'intermédiaire d'un différentiel (non représenté).

L'arbre secondaire 3 est équipé d'une pluralité de pignons 6, 7 de diamètres différents, dont seuls deux d'entre eux sont ici représentés. Chacun de ces pignons 6, 7 est monté fixe sur l'arbre secondaire 3, de manière à présenter en toute circonstance une vitesse de rotation identique à celle de cet arbre.

L'arbre primaire 2 est quant à lui équipé d'un nombre correspondant de pignons fous 4, 5 chacun engrenés avec l'un des pignons de l'arbre secondaire 3. Ces pignons fous 4, 5 sont tous montés libres en rotation sur l'arbre primaire 2. Ils sont par ailleurs bloqués en translation sur l'arbre primaire 2, ici par des circlips 9, de manière à rester engrenés avec les pignons 6, 7 de l'arbre secondaire 3.

Les pignons fous 4, 5 sont ici chacun équipés d'un flasque 30 présentant une partie tubulaire 31 qui est engagée en force sur le pignon fou et une couronne 32 qui borde une extrémité de la partie tubulaire 31 et dont le bord périphérique comporte une série de crans 33 à flancs droits.

La boîte de vitesses 1 comporte par ailleurs des dispositifs de couplage permettant de solidariser en rotation l'un ou l'autre des pignons fous 4, 5 avec l'arbre primaire 2, de manière que cet arbre primaire 2 entraîne en rotation l'arbre secondaire 3 par l'intermédiaire de ce pignon fou et du pignon avec lequel il est engrené. Les pignons fous 4, 5 ayant tous des diamètres différents, le choix de coupler l'arbre primaire 2 avec l'un ou l'autre des pignons fous permet de sélectionner l'un ou l'autre des rapports de démultiplication offerts par la boîte de vitesses 1.

Ici, comme le montre la figure 1, la boîte de vitesses 1 comporte un seul dispositif de couplage 10 pour solidariser en rotation l'arbre primaire 2 avec l'un ou l'autre des deux pignons fous 4, 5 représentés.

Le dispositif de couplage 10 comporte à cet effet un moyeu 11 solidaire en rotation de l'arbre primaire 2, et des moyens de synchronisation 14A, 14B de la vitesse de rotation du pignon fou 4, 5 sélectionné avec celle du moyeu 11.

Le moyeu 11 est monté fixe sur l'arbre primaire 2, entre les deux pignons fous 4, 5. Il se présente sous la forme d'un tube pourvu d'une nervure périphérique intérieure 13 équipée de cannelures coopérant avec des cannelures prévues en correspondance sur l'arbre primaire 2. Le moyeu 11 est ainsi bloqué, d'une part, en translation axiale sur l'arbre primaire 2 par les deux pignons fous 4, 5, et, d'autre part, en rotation sur l'arbre primaire 2 par les cannelures de sa nervure périphérique intérieure 13.

Ce moyeu 11 porte par ailleurs une nervure périphérique externe 12 de part et d'autre de laquelle sont disposées deux séries de crans 12A à flancs inclinés (également appelés tocs).

Les moyens de synchronisation 14A, 14B sont destinés à assurer par frottements l'égalisation de la vitesse du pignon fou 4, 5 sélectionné avec celle du moyeu 11. Ils comportent à cet effet un empilement gauche 14A et un empilement droit 14B d'anneaux coniques, identiques et positionnés symétriquement par rapport au moyeu 11. Ces deux empilements 14A, 14B sont chacun adaptés à lier en rotation l'un ou l'autre des pignons fous 4, 5 avec l'arbre primaire 2. Seul l'empilement gauche 14A adapté à coopérer avec le pignon fou 4 sera ici décrit en détail.

Généralement, un tel empilement comporte au moins trois anneaux coniques, dont en particulier un premier anneau conique 16 engagé sur le moyeu 11 de manière à être solidaire en rotation de celui-ci.

Selon une caractéristique particulièrement avantageuse de l'invention, le dispositif de couplage 10 comporte en outre un anneau élastiquement déformable 18 interposé radialement entre ce premier anneau conique 16 et le moyeu 11, pour amortir les oscillations du couple transmis par le moyeu 11 au pignon fou 4, 5 sélectionné.

Les trois anneaux coniques 15, 16, 17 de l'empilement gauche 14A présentent ici chacun une paroi principale 15A, 16A, 17A de faible épaisseur dont les faces internes et externes sont coniques. Les parois principales 15A, 16A, 17A de ces trois anneaux coniques 15, 16, 17 sont ici orientées de manière à présenter une extrémité gauche de grand diamètre tournée du côté du pignon fou 4 et une extrémité droite opposée de plus petit diamètre.

Un premier anneau conique, appelé anneau supérieur 15, comporte une paroi plane 15B qui ferme l'extrémité droite de sa paroi principale 15A et qui présente une ouverture centrale pourvue d'une série de crans 15C à flancs inclinés. Cet anneau supérieur 15 est engagé sur le moyeu 11 de manière que ses crans 15C coopèrent avec les crans 12A du moyeu 11. De cette manière, l'anneau supérieur 15 est solidaire en rotation du moyeu 11 et est libre en transition axiale sur ce dernier.

Un second anneau conique de diamètre inférieur au premier, appelé anneau inférieur 16, comporte une paroi plane 16B qui ferme l'extrémité gauche de sa paroi principale 16A et qui présente une ouverture centrale bordée d'un rebord tubulaire 16C engagé sur le moyeu 11. L'extrémité droite de ce rebord tubulaire 16C est pourvue d'une série de crans 16D à flancs inclinés aptes à coopérer avec les crans 12A du moyeu 11. De cette manière, l'anneau inférieur 16 est solidaire en rotation du moyeu 11. L'extrémité gauche de ce rebord tubulaire 16C est quant à elle en appui contre des moyens de butée axiale 19 du moyeu 11, formés ici par des circlips. De cette manière, l'anneau inférieur 16 est bloqué en translation axiale sur le moyeu 11.

Un troisième anneau conique, appelé anneau intermédiaire 17, est interposé entre les anneaux inférieur et supérieur 15, 16. Les faces externe et interne de sa paroi principale 17A sont équipées de revêtements de friction adaptés à frotter contre les faces correspondantes des anneaux inférieur et supérieur 15, 16 lorsque ces anneaux sont mis en pression les uns contre les autres. Cet anneau intermédiaire 17 présente le long de l'extrémité gauche de sa paroi principale 17A une série de crans 17B à flancs droits adaptés à coopérer avec les crans 33 du flasque 30 dont est équipé le pignon fou 4. De cette manière, l'anneau intermédiaire 17 est rendu solidaire en rotation du pignon fou 4 et est libre en translation axiale par rapport à ce dernier.

L'anneau élastiquement déformable 18 est quant à lui interposé radialement (par rapport à l'axe de l'arbre primaire 2) entre la face intérieure du rebord tubulaire 16G de l'anneau inférieur 16 et la face extérieure du moyeu 11. Il est adapté à s'écraser et à offrir ainsi à l'anneau inférieur 16 un degré de mobilité en translation radiale par rapport au moyeu 11, ainsi que des degrés de liberté en pivotement autour d'axes perpendiculaires à l'axe de l'arbre primaire 2.

L'anneau élastiquement déformable 18 présente ici une partie tubulaire 18A qui est emmanchée sur le moyeu 11 et sur laquelle ledit anneau inférieur 16 est emmanché, et une couronne 18B qui borde l'extrémité gauche de sa partie tubulaire 18A et qui est prise en sandwich entre le circlip 19 et l'anneau inférieur 16.

Préférentiellement, la partie tubulaire 18A de l'anneau élastiquement déformable 18 présente, à l'opposé de la couronne 18B, des encoches (non visibles sur la figure) d'axes parallèles à l'axe de l'arbre primaire 2 et régulièrement réparties le long de son pourtour. L'anneau supérieur 15 est ainsi adapté à venir en appui contre le moyeu 11 au travers de ces encoches, de manière à être correctement guidé en rotation autour de l'axe de l'arbre primaire 2.

Tel que représenté sur la figure, l'anneau élastiquement déformable 18 est réalisé d'une seule pièce en matière compressible, ici en élastomère. Il présente une épaisseur moyenne comprise entre 0,5 et 2 millimètres, préférentiellement égale à 1 millimètre, si bien que le débattement de l'anneau inférieur 16 par rapport au moyeu 11 reste limité.

En variante, on pourra prévoir que cet anneau élastiquement déformable soit réalisé dans un matériau non compressible, par exemple en tôle ondulée.

Quoi qu'il en soit, cet anneau élastiquement déformable 18 pourra au choix être laissé libre par rapport au moyeu et à l'anneau inférieur 16 ou être rapporté sur le moyeu et/ou sur l'anneau inférieur 16, par exemple par collage ou par surmoulage.

Pour piloter en position les moyens de synchronisation 14A, 14B, le dispositif de couplage 10 comporte un baladeur 20 formé par un roulement à billes 21 dont la bague intérieure est ajustée sur la nervure périphérique externe 12 du moyeu 11 et dont la bague extérieure est bloquée dans une fourchette 22 en forme d'anneau. Cette fourchette est munie d'un bras (non représenté) sur lequel agit le levier de boîte de vitesses pour déplacer le baladeur 20 vers l'un ou l'autre des deux pignons fous 4, 5.

En se déplaçant, le baladeur 20 appuie sur la paroi plane 15B de l'anneau supérieur 15 et met ainsi en pression les différents anneaux coniques les uns contre les autres de manière à les synchroniser et, partant, à lier en rotation le moyeu 11 avec le pignon fou 4.

Les crans 15C à flancs inclinés de l'anneau supérieur 15 permettent d'améliorer cette mise en pression des anneaux coniques les uns contre les autres. En effet, grâce à cette inclinaison, le couple transmis par le moyeu 11 à l'anneau supérieur 15 engendre un effort axial supplémentaire qui pousse l'anneau supérieur 15 contre l'anneau intermédiaire 17.

Les moyens de couplage 10 comprennent enfin des moyens de rappel 40 des anneaux coniques permettant de les désolidariser lorsque le baladeur 20 revient en position initiale. Ces moyens de rappel 40 comprennent une rondelle en tôle ondulée positionnée en compression entre deux rondelles plates dont l'une prend appui sur l'anneau inférieur 16 et dont l'autre prend appui sur l'anneau supérieur 15. Ainsi, lorsque le baladeur 20 revient en position initiale, la rondelle élastique exerce un effort sur l'anneau supérieur 15 de manière à ce que les différents anneaux coniques se désengagent les uns des autres.

La présente invention n'est nullement limitée aux modes de réalisation décrits et représentés, mais l'homme du métier saura y apporter toute variante conforme à son esprit.

## Revendications

1. Dispositif de couplage (10) d'un arbre (2) de boîte de vitesses (1) avec un pignon fou (4) monté sur cet arbre (2), comportant :
- un moyeu (11) solidaire en rotation dudit arbre (2), et
- des moyens de synchronisation (14A) de la vitesse du pignon fou (4) avec celle dudit moyeu (11) comprenant au moins un anneau conique (16) engagé sur ledit moyeu (11) et solidaire en rotation de celui-ci,
**caractérisé en ce qu'**il comporte un anneau élastiquement déformable (18) interposé radialement entre ledit anneau conique (16) et ledit moyeu (11).

2. Dispositif de couplage (10) selon la revendication précédente, dans lequel ledit anneau élastiquement déformable (18) comporte une partie tubulaire (18A) qui est emmanchée sur le moyeu (11) et sur laquelle ledit anneau conique (16) est emmanché.

3. Dispositif de couplage (10) selon l'une des revendications précédentes, dans lequel le moyeu (11) comporte des moyens de butée axiale (19) adaptés à coopérer avec ledit anneau conique (16) et dans lequel ledit anneau élastiquement déformable (18) présente une partie interposée axialement entre lesdits moyens de butée axiale (19) et ledit anneau conique (16).

4. Dispositif de couplage (10) selon les deux revendications précédentes, dans lequel ladite partie de l'anneau élastiquement déformable (18) est formée par une couronne (18B) qui borde une extrémité de sa partie tubulaire (18A) et qui est prise en sandwich entre lesdits moyens de butée axiale (19) et ledit anneau conique (16).

5. Dispositif de couplage (10) selon l'une des revendications précédentes, dans lequel les moyens de synchronisation (14A) comportent plusieurs anneaux coniques (15, 16) de diamètres différents solidaires en rotation du moyeu (11) et dans lequel ledit anneau élastiquement déformable (18) est interposé radialement entre l'anneau conique (16) de plus petit diamètre et ledit moyeu (11).

6. Dispositif de couplage (10) selon la revendication précédente, dans lequel ledit anneau élastiquement déformable (18) présente des encoches au travers desquelles chaque anneau conique (15) autre que l'anneau conique (16) de plus petit diamètre prend appui contre le moyeu (11).

7. Dispositif de couplage (10) selon l'une des revendications précédentes, dans lequel ledit anneau élastiquement déformable (18) est réalisé d'une seule pièce en élastomère.

8. Dispositif de couplage (10) selon l'une des revendications 1 à 6, dans lequel ledit anneau élastiquement déformable (18) est réalisé d'une seule pièce en tôle ondulée.

9. Dispositif de couplage (10) selon l'une des revendications précédentes, dans lequel ledit anneau élastiquement déformable (18) est monté libre par rapport audit anneau conique (16).

10. Dispositif de couplage (10) selon l'une des revendications 1 à 8, dans lequel ledit anneau élastiquement déformable (18) est rapporté par collage ou surmoulage sur ledit anneau conique (16).
